Europäisches Patentamt

European Patent Office

Office européen des brevets

(11) Publication number: **0 286 064**
**A2**

## EUROPEAN PATENT APPLICATION

(21) Application number: 88105470.4

(22) Date of filing: 06.04.88

(51) Int. Cl.⁴ **G11B 5/86**

(30) Priority: 09.04.87 JP 87852/87

(43) Date of publication of application:
**12.10.88 Bulletin 88/41**

(84) Designated Contracting States:
**DE GB**

(71) Applicant: **Hitachi Maxell Ltd.**
**No 1-1-88, Ushitora Ibaraki-shi**
**Osaka-fu(JP)**

(72) Inventor: **Kishimoto, Mikio**
**3-302, 3-2 Yamazaki Shimamoto-cho**
**Mishima-gun Osaka-fu(JP)**
Inventor: **Kitahata, Shinichi**
**3-6-6, Hirose Shimamoto-cho**
**Mishima-gun Osaka-fu(JP)**

(74) Representative: **von Kreisler, Alek et al**
**Patentanwälte Von Kreisler-Selting-Werner**
**Deichmannhaus am Hauptbahnhof**
**D-5000 Köln 1(DE)**

(54) Production of signal-carrying magnetic recording medium.

(57) A process for preparing a signal-carrying magnetic recording medium which comprises piling up a first magnetic recording medium having recorded signals and a second magnetic recording medium having no recorded signal, the scond magnetic recording medium having a magnetic layer comprising hexagonal crystalline ferrite particles and a coercive force of 1/2 or less of that of the first magnetic recording medium at an ordinary temperature, and applying thereto alternating magnetic field at a temperature at which the coercive force of the second magnetic recording medium is lower than that at an ordinary temperature, whereby the signals recorded on the first magnetic recording medium are transcribed to the second magnetic recording medium.

EP 0 286 064 A2

Xerox Copy Centre

## PRODUCTION OF SIGNAL-CARRYING MAGNETIC RECORDING MEDIUM

The present invention relates to a process for preparing a signal-carrying magnetic recording medium. More particularly, it relates to a process for making magnetic recording media signal-recoded efficiently.

Commercially available magnetic recording tapes carrying recorded signals of voices, images or the like (i.e. soft tapes) thereon are usually produced one by one through dubbing from a magnetic recording tape having recorded signals (i.e. a master tape) on a dubbing deck. For commercial production of soft tapes, this usual process is not suitable, because it requires many dubbing decks and needs great time and labor work so that the produced soft tapes are expensive.

In recent years, there has been developed a process for dubbing by magnetic transcription wherein a master tape is put on a magnetic recording tape carrying no signal thereon, and alternating magnetic field is applied thereto, whereby signals on the master tape are transcribed onto the magnetic recording tape to give a soft tape. This magnetic transcription process is attractive for commercial production of soft tapes, because dubbing of a large number of magnetic recording tapes can be accomplished easily and rapidly so that the production cost is kept low.

In said magnetic transcription process, a master tape is practically required to have a coercive force about three times or more that of a magnetic recording tape for a soft tape. When a magnetic recording tape using ordinary acicular magnetic particles (e.g. gamma-$Fe_2O_3$) as the magnetic element is employed for production of a soft tape and its coercive force is retained in such an extent as assuring high density recording characteristics, a master tape is obliged to have an extremely high coercive force so that initial recording of signals thereto is quite difficult.

In order to make sure high density recording at a relatively low coercive force in comparison with ordinary acicular magnetic particles, a study is now focused on a magnetic recording tape using hexagonal crystalline ferrite particles as the magnetic element, because such ferrite particles have originally a high coercive force such as about 3,000 to 4,000 oersteds (Oe) but their coercive force can be readily lowered by substituting a portion of the iron component therein with Co, Ni, Zn, Mn, Ti, Zr, Sn, Ge, In, V, etc. so as to be suitable for recording. A larger amount of the substitution makes it possible to accomplish recording at a lower coercive force but unfortunately also results in lowering high density recording characteristics. Namely, the substitution amount is desired to be larger for easier recording to produce a master tape as well as soft tapes, while it is desired to be smaller for maintenance of high density recording characteristics of soft tapes.

In the course of an extensive study for establishment of an efficient process for magnetic transcription, it was noticed that the coercive force of hexagonal crystalline ferrite particles depends on temperature significantly. For instance, the relationship of the coercive force of a magnetic recording tape obtained in Example 1 as hereinafter given (i.e. a magnetic recording tape having a magnetic layer comprising hexagonal crystalline particles of barium ferrite) measured in a vertical direction to the tape surface with the temperature is shown in Fig. I of the accompanying drawing, from which it is understood that the coercive force of said tape at 30°C (a normal temperature to which a magnetic recording tape is exposed on recording and reproducing) is 740 Oe and decreases with lowering of the temperature, giving 680 Oe at 0°C. Thus, the difference of the coercive force between 30°C and 0°C is so great as 60 Oe.

On utilization of said significant temperature dependency of the coercive force, there has now been successfully provided a process for producing signal-carrying magnetic recording tapes wherein a master tape having a relatively low coercive force is used and magnetic recording tapes having a magnetic layer comprising hexagonal crystalline ferrite particles and showing good high density recording characteristics are employed, yet magnetic transcription of the signals recorded on the master tape to the magnetic recording tapes is efficiently accomplished to give soft tapes affording a large reproducing output.

The process for preparing a signal-carrying magnetic recording medium according to this invention comprises placing a first magnetic recording medium having recorded signals on a second magnetic recording medium having no recorded signal, the second magnetic recording medium having a magnetic layer comprising hexagonal crystalline ferrite particles and a coercive force of 1/2 or less of that of the first magnetic recording medium at an ordinary temperature, and applying thereto alternating magnetic field at a temperature at which the coercive force of the second magnetic recording medium is lower than that at an ordinary temperature, whereby the signals recorded on the first magnetic recording medium are transcribed to the second magnetic recording medium.

The process of the invention is widely applicable to production of various signal-carrying magnetic recording media such as tapes, discs, cards, etc. In the foregoing and subsequent disclosure, the invention process will be explained taking a magnetic recording tape as an example for the sake of convenience.

2

However, the scope of the invention should not be construed to be limited thereto. Further, the ordinary temperature can mean a temperature of from 0 to 30°C, unless any specific temperature is referred to.

In the process of the invention, a first magnetic recording tape having recorded signals thereon (i.e. a master tape) and a second magnetic recording tape having no recorded signal thereon are piled up, and alternating magnetic field is applied thereto at a temperature at which the coercive force of the second magnetic recording tape is lower than that at an ordinary temperature, particularly at a temperature at which the coercive force of the second magnetic recording tape is 30 Oe or more lower than that at an ordinary temperature, whereby the signals recorded on the master tape is transcribed onto the second magnetic recording tape.

The coercive force of the master tape at an ordinary temperature may be two times or more that of the second recording tape. In other words, the proportion of the coercive force of the second recording tape to that of the master tape at an ordinary temperature may be 1/2 or less. Preferably, the temperature at which magnetic transcription is effected may be the one at which the coercive force of the second recording tape is 30 Oe or more below that at an ordinary temperature. When the difference in the coercive force is too small, sufficient magnetic transcription characteristics are hardly obtained.

The coercive force of the second recording tape gives usually a minimum value at a certain temperature, and it gives higher values at both sides of such temperature, i.e. at higher and lower temperatures than said certain temperature. Since said certain temperature is usually considerably low and, in most cases, lower than 0°C, the temperature at which magnetic transcription is carried out may be obtained simply by cooling the atmosphere in which magnetic transcription is effected or the portion of the second recording tape where magnetic transcription is made to a temperature at which said difference in coercive force is produced. Even when the minimum value is present at a temperature higher than an ordinary temperature, enhancement of magnetic transcription characteristics can be made by heating said atmosphere or said portion on magnetic transcription.

The temperature dependency of the covercive force of the second recording tape is dependent on the kind of the ferrite particles to be used as the magnetic element, and suitable selection of the kind of the ferrite particles is effective for regulation of said temperature dependency. In this invention, hexagonal crystalline ferrite particles are used as a major component of the magnetic element. When desired, however, the temperature dependency of the coercive force of the second recording tape may be controlled by substitution of a portion of the iron component in the ferrite particles with any appropriate metallic element as hereinabove exemplified, choosing the production conditions of the ferrite particles properly or using a small amount of any other acicular magnetic particles in addition to the ferrite particles. In case of the temperature dependency being too small, thermal energy required for cooling or heating to a temperature suitable for magnetic transcription becomes large so that the production cost is made high, and also the second recording tape may be deteriorated in its property. A second recording tape using any magnetic particles other than hexagonal crystalline ferrite particles as a major component in the magnetic element can hardly afford sufficient temperature dependency. In case of the temperature dependency being too large, the temperature control on magnetic transcription is difficult, and also variation of the output characteristics due to the temperature change on reproduction after the magnetic transcription is great. The second recording tape as particularly preferred is to have such a temperature dependency as giving the depression of the coercive force of 30 Oe or more but of 100 Oe or less at 0°C in comparison with that at an ordinary temperature.

The hexagonal crystalline ferrite particles to be used for the second recording tape may be the one representable by the formula: $AO.nFe_2O_3$ wherein A is at least one of Ba, Sr, Pb and Ca and a portion of Fe may be substituted with any of Co, Ni, Zn, Mn, Ti, Zr, Sn, Ge, In, V, etc. As stated above, the temperature dependency of the coercive force can be controlled by modification of the kind of the substituting component and the amount of the substitution. Further, a small amount(s) of acicular iron oxide magnetic particles and/or any other magnetic particles may be incorporated into hexagonal crystalline ferrite particles.

The second recording tapes for production of soft tapes may be manufactured by a per se conventional procedure. For instance, magnetic particles comprising hexagonal crystalline ferrite particles as a major component are admixed with a binder resin (e.g. vinyl chloride/vinyl acetate copolymer, polyvinyl butyral resin, cellulose resin, polyurethane resin, polyisocyanate resin, radiation-curable resin), an organic solvent (e.g. toluene, methylethylketone, methylisobutylketone, cyclohexanone, tetrahydrofuran, ethyl acetate) and, if necessary, any other conventional additive(s) (e.g. a dispersing agent, a lubricant, a polishing agent, an antistatic agent) to give a magnetic coating composition. The magnetic coating composition is applied onto a base film (e.g. a polyester film) by the aid of an applicator such as a roll coater, followed by drying to give a magnetic layer. Magnetic orientation by application of magnetic field onto the magnetic coating composition coated on the base film into a vertical direction to the surface of the magnetic layer is desirable,

3

because the magnetizable direction is oriented well in the vertical direction and the surface smoothness of the magnetic layer is enhanced. However, such magnetic orientation is not essential.

The master tape may be the one having a coercive force of about two times or more that of the second recording tape at an ordinary temperature. In order to make initial recording of signals easier, the master tape is desired to have a coercive force of 3,000 Oe or less at an ordinary temperature. The magnetic layer of the master tape may comprise usually Fe, Co, Ni, etc. and/or alloys of these metals with or without other metals and/or small amounts of other non-metallic elements in view of its coercive force. Such magnetic layer can be thus formed as a magnetic coating layer comprising said metals and/or alloys with a binder resin or as a thin magnetic film comprising said metals and/or alloys. Formation of the magentic coating layer nay be achieved by applying a magnetic coating composition comprising magnetic particles, a binder resin and an organic solvent, optionally with other additive(s) onto a base film such as a polyester film, followed by drying. The binder resin, the organic solvent and the other additive(s) may be those as exemplified above. Formation of the thin magnetic film may be accomplished by vapor evaporation of metals or alloys onto a base film such as a polyester film.

The operation for magnetic transcription may be effected by a per se conventional procedure, but in this invention, the temperature should be appripriately chosen as explained above. Thus, the master tape and the second recording tape are piled up, and alternating magnetic field is applied thereto, whereby magnetic transcription is accomplished. The strength of the alternating magnetic field may be appropriately decided depending on the coercive force of the master tape, and usually it is so set that the maximum value is from about 30 to 70 % of the coercive force of the master tape.

As understood from the above disclosure, the process of this invention can remarkably enhance the magnetic transcription characteristics on magnetic transcription of the signals recorded on a master tape to a magnetic recording tape for a soft tape. The invention process also makes it possible to use a master tape having a relatively low coercive force so that signal-recording can be readily accomplished, even when a magnetic recording tape having a high coercive force and being good in high density recording characteristics is used for production of a soft tape. Accordingly, this invention provides a practially applicable magnetic transcription process for dubbing a large number of magnetic recording tapes with a high speed to give soft tapes at a low cost.

Practical and presently preferred embodiments of the invention are illustratively shown in the following Examples and Comparative Examples wherein part(s) are by weight unless otherwise indicated.


Example 1

Ferric chloride (1 mol), barium chloride (1/10 mol), cobalt chloride (1/30 mol) and titanium chloride (1/30 mol) were dissolved in water (1 liter), and the resultant solution was combined with an aqueous solution of sodium hydroxide (6 mol). The resultant dispersion was allowed to react in an autoclave at 300°C for 4 hours. The precipitated product was washed with water, collected by filtration and dried. The dried product was heated at 800°C for 2 hours in the air to give hexagonal crystalline particles of barium ferrite.

According to the following prescription, the ferrite particles thus obtained and the other materials were mixed uniformly in a ball mill for 48 hours to make a magnetic coating composition:

| | Part(s) |
|---|---|
| Hexagonal crystalline particles of barium ferrite | 800 |
| Vinyl chloride/vinyl acetate/ vinyl alcohol copolymer ("VAGH" manufactured by Union Carbide Corp.) | 110 |
| Urethane elastomer ("Pandex T-5250" manufactured by Dainihon Ink Co., Ltd.) | 70 |
| Low molecular weight trifunctional isocyanate compound ("Colonate L" manufactured by Nippon Polyurethane Co., Ltd.) | 20 |
| Methylisobutylketone | 500 |
| Toluene | 500 |

The magnetic coating composition was applied onto a surface of a polyester film (12 microns in thickness) and dried to make a magnetic layer having a dry thickness of 12 microns, followed by calendering and cutting in a predetermined width to give a magnetic recording tape for a soft tape.

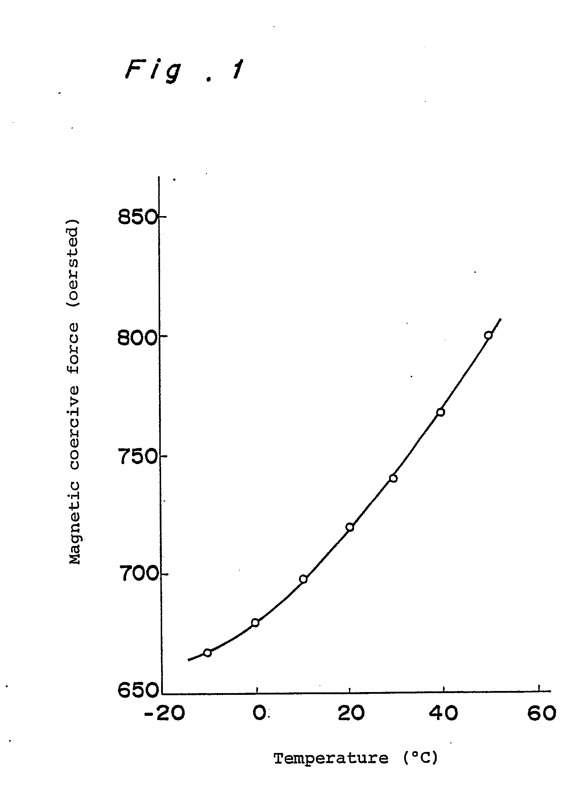

As shown in Fig. 1 of the accompanying drawing wherein the abscissa indicates coercive force and the ordinate indicates temperature, the coercive force vertical to the tape surface depends upon the temperature. Namely, the magnetic recording tape showed 740 oersteds at an ordinary temperature (30°C) and 680 oersteds at 0°C.

Separately, a pattern of signals (61 kfci) was recorded through a sendust head onto a magnetic recording tape having a magnetic layer comprising magnetic metallic iron particles and showing a coercive force of 2050 oersteds at an ordinary temperature (30°C) to give a master tape.

The master tape and the magnetic recording tape for a soft tape were piled up and wound around a cylinder (diameter, 50 cm) made of an acrylic resin, followed by cooling to 0°C. While maintaining the temperature at 0°C, alternating magnetic field was applied to the cylinder. By increasing the alternating magnetic field gradually up to a maximum of 1,000 oersteds and then decreasing it gradually to 0 oersted, the pattern of signals recorded on the master tape was transcribed to the magnetic recording tape for a soft tape, whereby a signal-carrying soft tape was obtained.

Comparative Example 1

In the same manner as in Example 1 but performing the magnetic transcription of signals at an ordinary temperature (30°C), there was obtained a signal-carrying soft tape.

Example 2

In the same manner as in Example 1 but using cobalt chloride (1/20 mol) and titanium chloride (1/20 mol), there was produced hexagonal crystalline particles of barium ferrite. As in Example 1, a magnetic coating composition was prepared using said ferrite particles, and a magnetic recording tape for a soft tape was manufactured using said magnetic coating composition. The coercive force vertical to the tape surface was 590 oersteds at an ordinary temperature (30°C) and 540 oersteds at 0°C.

Separately, a master tape having a coercive force of 1,560 oersteds at an ordinary temperature (30°C) was prepared as in Example 1. Using the magnetic recording tape for a soft tape and the master tape, a signal-carrying soft tape was prepared in the same manner as in Example 1 but setting the maximum alternating magnetic field to be applied at 800 oersteds.

## Comparative Example 2

In the same manner as in Example 2 but performing the magnetic transcription of signals at an ordinary temperature (30°C), there was obtained a signal-carrying soft tape.

## Example 3

In the same manner as in Example I but using cobalt chloride (1/40 mol) and titanium chloride (1 40 mol) and conducting the reaction in an autoclave at 250°C and heating in the air at 700°C for 8 hours, there was produced hexagonal crystalline particles of barium ferrite. As in Example 1, a magnetic coating composition was prepared using said ferrite particles, and a magnetic recording tape for a soft tape was manufactured using said magnetic coating composition. The coercive force vertical to the tape surface was 750 oersteds at an ordinary temperature (30°C) and 730 oersteds at 0°C.

Separately, a master tape having a coercive force of 2,050 oersteds at an ordinary temperature (30°C) was prepared as in Example 1. Using the magnetic recording tape for a soft tape and the master tape, a signal-carrying soft tape was prepared in the same manner as in Example 1.

## Comparative Example 3

In the same manner as in Example 3 but performing the magnetic transcription of signals at an ordinary temperature (30°C), there was obtained a signal-carrying soft tape.

## Comparative Example 4

In the same manner as in Example 1 but using Co-containing gamma-$Fe_2O_3$ particles instead of hexagonal crystalline barium ferrite particles, there was prepared a magnetic coating composition, and a magnetic recording tape for a soft tape was manufactured using said magnetic coating composition. The coercive force vertical to the tape surface was 670 oersteds at an ordinary temperature (30°C) and 690 oersteds at 0°C.

Separately, a master tape having a coercive force of 2,050 oersteds at an ordinary temperature (30°C) was prepared as in Example 1. Using the magnetic recording tape and the master tape, a signal-carrying soft tape was prepared in the same manner as in Example 1.

## Comparative Example 5

In the same manner as in Comparative Example 4 but performing the magnetic transcription of signals at an ordinary temperature (30°C), there was obtained a signalcarrying soft tape.

The signal-carrying soft tapes obtained in the foregoing Examples and Comparative Examples were subjected to measurement of reproducing output at 61 kfci at an ordinary temperature (30°C). The measured results are shown in Table 1 as a relative value to the reproducing output of the master tape (used in the corresponding Example or Comparative Example) measured at 61 kfci at an ordinary temperature (30°C) immediately after recordation of signals, which is taken as 0 dB. The balance of the coercive force of the soft tape in Table 1 indicates the difference between the coercive force at an ordinary temperature (30°C) and the coercive force at the temperature for magnetic transcription of signals.

Table 1

| | Coercive force at 30°C (oersted) | | Temperature for signal transcription (°C) | Balance of coercive force of soft tape (oersted) | Reproducing output of soft tape (dB) |
|---|---|---|---|---|---|
| | Soft tape | Master tape | | | |
| Exmaple 1 | 740 | 2050 | 0 | -60 | -2.6 |
| Comparative Example 1 | 740 | 2050 | 30 | 0 | -4.3 |
| Exmaple 2 | 590 | 1560 | 0 | -50 | -2.9 |
| Comparative Example 2 | 590 | 1560 | 30 | 0 | -4.0 |
| Exmaple 3 | 750 | 2050 | 0 | -20 | -3.7 |
| Comparative Example 3 | 750 | 2050 | 30 | 0 | -4.5 |
| Comparative Example 4 | 670 | 2050 | 0 | +20 | -5.6 |
| Comparative Example 5 | 670 | 2050 | 30 | 0 | -5.2 |

From the above results, it is understood that according to the invention method (Examples 1 to 3) wherein the temperature dependency of the coercive force of a soft tape using hexagonal crystalline barium ferrite particles as the recording element is utilized and magnetic transcription of signals is carried out at a temperature at which the coercive force is lower than that at an ordinary temperature, the magnetic

7

transcription can be made much efficiently and the signal-carrying soft tape as obtained gives a great reproduction output in comparison with a conventional method (Comparative Examples 1 to 3) wherein magnetic transciption is carried out at an ordinary temperature. These effects are particularly noticiable in the soft tapes (Examples 1 and 2) of which the coercive force at the temperature for transcription is 30 oersteds or more lower than that at an ordinary temperature.

It is also understood that the soft tapes (Comprative Examples 4 and 5) using conventional acicular iron oxide particles as the magnetic recording element can not achieve sufficient transcription irrespective of the temperature for transcription being varied, and the reproducing output of those tapes is extremely inferior.

## Claims

1. A process for preparing a signal-carrying magnetic recording medium which comprises piling up a first magnetic recording medium having recorded signals and a second magnetic recording medium having no recorded signal, the scond magnetic recording medium having a magnetic layer comprising hexagonal crystalline ferrite particles and a coercive force of 1/2 or less of that of the first magnetic recording medium at an ordinary temperature, and applying thereto alternating magnetic field at a temperature at which the coercive force of the second magnetic recording medium is lower than that at an ordinary temperature, whereby the signals recorded on the first magnetic recording medium are transcribed to the second magnetic recording medium.

2. The process according to claim 1, wherein the coercive force of the second magnetic recording medium at the temperature for magnetic transcription is 30 oersteds or more lower than that at an ordinary temperature.

3. The process according to claim 1, wherein the temperature for magnetic transcription is lower than an ordinary temperature.

4. The process according to any of claims 1 to 3, wherein the ordinary temperature is 30°C.

# Fig . 1